# EUROPÄISCHE PATENTSCHRIFT

(11) **EP 0 742 627 B1**
(45) Veröffentlichungstag und Bekanntmachung des Hinweises auf die Patenterteilung: **04.03.1998**
(21) Anmeldenummer: 96250102.9
(22) Anmeldetag: 06.05.1996
(51) Int. Cl.: H02G 5/06

(54) **Säulenförmiger Stützer zur Abstützung eines Hochspannungsleiters**
Column-shaped support for supporting a high voltage conductor
Support en forme de colonne pour le support d'un conducteur haute tension

(30) Priorität: 08.05.1995 DE 19517591
(43) Veröffentlichungstag der Anmeldung: 13.11.1996
(73) Patentinhaber: SIEMENS AKTIENGESELLSCHAFT, 80333 München (DE)
(72) Erfinder: Kelch, Thomas, 13465 Berlin (DE)

(56) Entgegenhaltungen:
- US-A- 2 275 203
- US-A- 2 293 310
- US-A- 2 396 131
- US-E- R E23 811

## Beschreibung

Die Erfindung bezieht sich auf einen säulenförmiger Stützer zur isolierenden radialen Abstützung eines Hochspannungsleiters in einem Kapselungsrohr, der einen Isolatorkörper und einen gesonderten, am Fuß des Stützers angeordneten Standkörper aufweist, wobei der Standkörper mit dem Isolatorkörper beweglich, insbesondere schwenkbar mittels eines Gelenkes verbunden ist und wobei der Isolatorkörper oder der Standkörper eine Aufnahme mit einer zylindrischen oder kugeligen Gelenkpfanne und der jeweils andere Körper einen entsprechend komplementär ausgebildeten, in der Aufnahme angeordneten Gelenkkopf aufweist.

Ein säulenförmiger Stützer ist beispielsweise aus der US 2,280,200 bekannt. Dort ist eine Anordnung beschrieben, bei der ein Leiter innerhalb eines Rohres durch in den Leiter einsteckbare säulenförmige Isolierstützer gehalten wird. Die Stützer stehen jeweils ohne eine erkennbare Befestigung auf der Innenwand des Kapselungsrohres.

Bei der Abstützung eines Hochspannungsleiters in einem Rohrgas leiter können wegen der hohen elektrischen Feldstärke dielektrische Probleme auftreten. Dies kann beispielsweise im Bereich der Abstützung der Stützer an der Innenwand des Kapselungsrohres der Fall sein, wenn dort schmale Spalte entstehen. Es ist daher dafür zu sorgen, daß bei jedem säulenförmigen Stützer der Fuß spaltfrei und möglichst gerade auf der Innenwand des Kapselungsrohres aufliegt.

Aus der DE-OS 29 31 790 ist ein säulenförmiger Stützer der eingangs genannten Art mit einem zylindrischen Gleitbolzen bekannt, der eine Axialbewegung des Stützers und eine Schwenkbewegung in radialer Richtung des Hochspannungsleiters zuläßt.

Aus der US 2 396 131 ist ein säulenförmiger Stützer gemäß dem Oberbegriff des Anspruchs 1 bekannt.

Der vorliegenden Erfindung liegt die Aufgabe zugrunde, bei einem säulenförmigen Stützer der eingangs genannten Art eine sichere Auflage am Kapselungsrohr mit konstruktiv einfachen und kostengünstigen Mitteln und geringem Montageaufwand zu gewährleisten.

Die Aufgabe wird erfindungsgemäß dadurch gelöst, daß die Aufnahme jeweils eine zylindrische Bohrung aufweist, deren Boden die Gelenkpfanne bildet.

Bei einer Fehlausrichtung eines Stützers, bei der dieser nicht senkrecht auf einer entsprechenden Tangentialfläche der Kapselungsrohrwandung steht, kann dies gemäß der Erfindung durch die relative Beweglichkeit von Standkörper und Isolatorkörper ausgeglichen werden. Der Standkörper liegt dann in idealer Weise an der Innenwand der Kapselung spaltfrei an und es sind dielektrische Belastungen reduziert. Der Standkörper ist im Normalfall an der Innenwand des Kapselungsgehäuses zur Reduzierung von mechanischen Spannungen sowohl in Umfangsrichtung als auch in Axialrichtung frei erfindungsgemäß gleitend verschiebbar.

Ein Gelenk erlaubt das Schwenken des Standkörpers, so daß dieser in der gewünschten Weise an der Innenwand des Kapselungsrohres anliegt. Je nach der Befestigungsart des Isolatorkörpers an dem Hochspannungsleiter kann auch der Isolatorkörper in engen Grenzen schwenkbar sein.

Beispielsweise kann der Isolatorkörper eine Aufnahme mit einer zylindrischen oder kugeligen Gelenkpfanne aufweisen und der Standkörper kann einen entsprechend komplementär ausgebildeten, in der Aufnahme angeordneten Gelenkkopf aufweisen.

Es ist jedoch auch umgekehrt möglich, daß der Standkörper eine Aufnahme mit einer zylindrischen oder kugeligen Gelenkpfanne aufweist und daß der Isolatorkörper einen entsprechend komplementär ausgebildeten, in der Aufnahme angeordneten Gelenkkopf aufweist.

Bei der Gestaltung des Gelenkes ist sicherzustellen, daß nicht bei einer großen Belastung des Stützers in Längsrichtung ein Ausknicken stattfindet. Ein Beispiel für eine solche Ausbildung ist im Rahmen des Ausführungsbeispiels beschrieben.

Die zylindrische Bohrung kann derart ausgestaltet sein, daß in ihr das den Gelenkkopf tragende Teil gehalten, und ggf. der Schwenkbereich des Gelenkes begrenzt ist.

Dies führt bei der Montage der Stützer zu dem Vorteil, daß diese aus den Isolatorkörpern und den Standkörpern zusammengesetzt und später gemeinsam montiert werden können, ohne daß ein Auseinanderfallen während des Montagevorganges zu befürchten ist.

Die Ausbildung des Gelenks als Kugelgelenk vereinfacht vor allem die Montage und macht das Gelenk in allen Richtungen beweglich.

Eine vorteilhafte Ausgestaltung der Erfindung sieht vor, daß zwischen der Aufnahme und dem jeweils anderen Körper eine haftende Masse angeordnet ist, die den jeweils anderen Körper in der Aufnahme hält.

Im folgenden wird die Erfindung anhand eines Ausführungsbeispiels in einer Zeichnung gezeigt und anschließend beschrieben.

Dabei zeigt die Figur im Längsschnitt einen Isolatorkörper und einen Standkörper in Form eines einseitig kugelig ausgebildeten Isolierstoffplättchens,
Figur 2 eine vergrößerte schematische Darstellung des Fußes des Stützers in gerader Auflage,
Figur 3 die Anordnung ähnlich wie in Figur 2, jedoch in schräger Auflage.

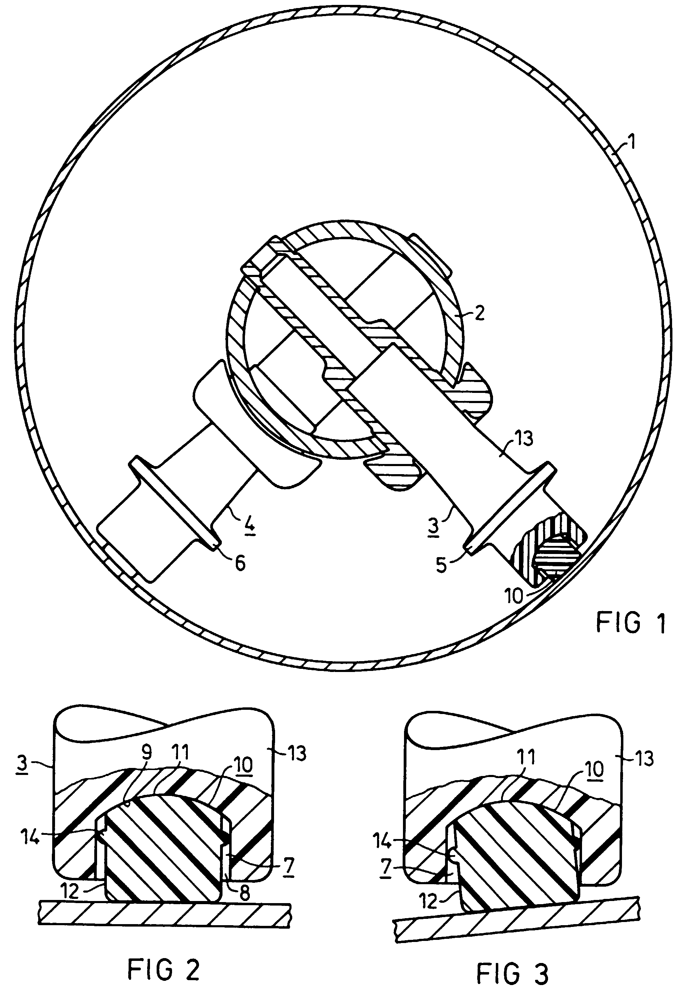

Innerhalb eines Kapselungsrohres 1 eines Hochspannungs-Rohrgasleiters ist ein Hochspannungsleiter 2 konzentrisch zum Kapselungsrohr 1 mittels säulenförmiger Stützer 3, 4 gehalten. Die Stützer sind als Steckstützer ausgebildet und durchsetzen den Hochspannungsleiter 2. Sie bestehen beispielsweise aus einem im Gußverfahren verarbeiteten Epoxidharz und sind mit je einem umlaufenden Schirm 5, 6 zur Verbesserung der dielektrischen Eigenschaften versehen. In seinem Fußbereich am Ende des Isolatorkörpers 13 weist jeder der Stützer 3, 4 eine Ausnehmung 7 auf (vgl. Figuren 2 und 3), die ihrerseits einen zylindrischen Teil 8 und einen sphärischen Teil 9 aufweist.

In der Aufnahme 7 ist jeweils ein Standkörper 10 angeordnet, der eine konvex ausgebildete sphärische Oberfläche 11 aufweist. Diese Oberfläche 11 bildet einen Kugelkopf und die sphärische, konkav ausgebildete Oberfläche 9 der Aufnahme 7 bildet die Gelenkpfanne eines zwischen dem Isolatorkörper 13 des Stützers 3 und dem Standkörper 10 gebildeten Gelenkes.

Dies bewirkt, daß die sphärischen Oberflächen 9, 11 aneinander gleiten können, wobei dennoch in jeder Stellung ein großflächiger spaltfreier Kontakt zwischen dem Isolatorkörper 13 und dem Standkörper 10 gewährleistet ist.

Da der Standkörper 10 zylindrisch ausgebildet und mit geringerem Durchmesser als der zylindrische Teil 8 der Aufnahme 7 versehen ist, findet eine Schwenkbewegung zwischen den beiden Körpern ihre Grenze erst an dem Punkt, an dem die zylindrische Außenkontur 12 des Standkörpers 10 die zylindrische Wand der Aufnahme 7 berührt.

Auf diese Weise kann, wie in den Figuren 2 und 3 dargestellt ist, der Standkörper 10 zwischen der Innenwand des Kapselungsrohres 1 und dem Isolatorkörper 13 eine feste Anlage auch dann vermitteln, wenn die Längsachse des Stützers 3, wie in der Figur 3 dargestellt, nicht senkrecht zu der Tangentialfläche des Kapselungsrohres im Standbereich des Stützers 3 ausgerichtet ist.

Um ein Halten des jeweiligen Standkörpers 10 in der Aufnahme 7 des jeweils zugeordneten Stützers 3, 4 während der Montage zu gewährleisten, weist entweder die Innenwand der Aufnahme 7 oder die Außenkontur des Standkörpers 10 deformierbare Stege 14 oder Noppen auf, die elastisch und/oder plastisch verformbar sind und eine Passung des Standkörpers 10 in der Aufnahme 7 vermitteln, wodurch im Zuge der Haftreibung das Herausfallen des Standkörpers 10 aus der Aufnahme 7 verhindert ist.

Die entsprechenden Stege oder Noppen müssen so schmal ausgebildet sein, daß sie bei Belastung des Stützers 3 in schräger Richtung und einer entsprechenden Ausrichtung des Standkörpers 10 leicht verformt werden können.

Es ist auch denkbar, den Zwischenraum zwischen der Innenwand der Aufnahme 7 und dem Standkörper 10 durch eine gelartige haftende Masse zu füllen, die einerseits den Standkörper 10 in der Aufnahme 7 hält, andererseits alle Spalte, die dielektrisch ungünstig sein können, auffüllt.

Der Standkörper 10 kann vorteilhaft beispielsweise aus PTFE bestehen.

Bei einer entsprechend weichen Beschaffenheit des Standkörpers können Unebenheiten an der Innenwand des Kapselungsrohres, beispielsweise überstehende Schweißnähte ausgeglichen werden.

## Patentansprüche

1. Säulenförmiger Stützer (3, 4) zur isolierenden radialen Abstützung eines Hochspannungsleiters (2) in einem Kapselungsrohr (1), der einen Isolatorkörper (13) und einen gesonderten, am Fuß des Stützers angeordneten Standkörper (10) aufweist, wobei der Standkörper (10) mit dem Isolatorkörper (13) beweglich, insbesondere schwenkbar mittels eines Gelenkes verbunden ist und wobei der Isolatorkörper (13) oder der Standkörper (10) eine Aufnahme (7) mit einer zylindrischen oder kugeligen Gelenkpfanne (9) und der jeweils andere Körper einen entsprechend komplementär ausgebildeten, in der Aufnahme (7) angeordneten Gelenkkopf aufweist, und die Aufnahme (7) jeweils eine zylindrische Bohrung (8) aufweist, deren Boden (9) die Gelenkpfanne bildet,
**dadurch gekennzeichnet,** daß
der Standkörper (10) an der Innenwand des Kapselungsgehäuses frei gleitend verschiebbar ist.

2. Säulenförmiger Stützer nach Anspruch 1,
**dadurch gekennzeichnet**, daß
das Gelenk als Kugelgelenk ausgebildet ist.

3. Säulenförmiger Stützer nach Anspruch 1 oder 2,
**dadurch gekennzeichnet**, daß
zwischen der Aufnahme (7) und dem jeweils anderen Körper (10) eine haftende Masse angeordnet ist, die den jeweils anderen Körper (10) in der Aufnahme (7) hält.

## Claims

1. Columnar post insulator (3, 4) for the insulating radial support of a high-voltage conductor (2) in a casing tube (1), which has an insulator body (13) and a separate standing body (10) arranged at the foot of the post insulator, with the standing body (10) being movably connected to the insulator body (13), in particular so as to be able to swivel by means of a joint, and with the insulator body (13) or the standing body (10) having a receiver (7) which has a cylindrical or spherical joint socket (9), and the respective other body having an appropriately complementarily shaped joint head which is arranged in the receiver (7), and the receiver (7) having in each case a cylindrical bore (8), the base (9) of which forms the joint socket, characterised in that the standing body (10) can be shifted in a freely sliding manner on the inside wall of the casing housing.

2. Columnar post insulator according to claim 1, characterised in that the joint is constructed as a spherical joint.

3. Columnar post insulator according to claim 1 or 2, characterised in that arranged between the receiver (7) and the respective other body (10) is an adhesive mass, which holds the respective other body (10) in the receiver (7).

## Revendications

1. Support (3,4) en forme de colonne, qui sert à soutenir, dans la direction radiale et de manière isolée, un conducteur (2) haute tension dans un tube (1) de blindage et qui comporte un élément (13) isolant et un montant (10) distinct, monté à la base du support, le montant (10) étant relié à l'élément (13) isolant de manière mobile, notamment de manière à pouvoir basculer au moyen d'une articulation, et l'élément (13) isolant ou le montant (10) comportant un dispositif de réception d'un coussinet (9) d'articulation cylindrique ou sphérique et l'autre élément comportant une tête d'articulation conformée de manière complémentaire en conséquence et placée dans le dispositif (7) de réception, et le dispositif (7) de réception comportant un perçage cylindrique dont le fond (9) forme le coussinet d'articulation, caractérisé en ce que le montant (10) peut coulisser sur la paroi intérieure du boîtier de blindage en glissant librement.

2. Support en forme de colonne suivant la revendication 1, caractérisé en ce que l'articulation est réalisée en joint sphérique.

3. Support en forme de colonne suivant la revendication 1 ou 2, caractérisé en ce qu'il est monté entre le dispositif (7) de réception et l'autre élément (10) une pâte adhésive qui retient l'autre élément (10) dans le dispositif (7) de réception.
